# EUROPEAN PATENT APPLICATION

(11) **EP 4 700 944 A2**
(43) Date of publication of application: **25.02.2026**
(21) Application number: 25189862.3
(22) Date of filing: 16.07.2025
(51) Int. Cl.: H01M 50/271

(54) **BATTERY COVER, BATTERY PACK COMPRISING THE COVER, AND METHODS OF MAKING AND USING THE SAME**

(30) Priority: 23.08.2024 US 202463686417 P
(71) Applicant: Trojan Battery Company LLC, Santa Fe Springs, CA 90670 (US)
(72) Inventor: ENGLE, Alexander, Santa Fe Springs, 90670 (US)
(74) Representative: Ter Meer Steinmeister & Partner

(57) **Abstract**

A battery cover, a resulting battery pack, and the methods of making and using the same are provided. Such a battery pack includes a cover and an interior structure. The cover includes a base, and a first and a second busbars, which provide a first offset in height relative to the cover base. The interior structure includes a substrate, a first pair of busbar connectors connected with high-voltage battery cells, and a second pair of busbar connectors connected with low-voltage battery cells. Each busbar connector defines a notch to accept a respective busbar. The first and the second pairs of busbar connectors provide a second offset in height relative to the substrate. The cover and the interior structure are configured to connect the high voltage first before the low voltage during a connection process, and disconnect the low voltage first before the high voltage during a disconnection process.

## Description

### PRIORITY CLAIM AND CROSS-REFERENCE

This application claims the benefit of U.S. Provisional Application No. 63/686,417, filed August 23, 2024, which application is expressly incorporated by reference herein in its entirety.

### FIELD OF THE INVENTION

The disclosure relates to a battery cover or a battery disconnect generally. More particularly, the disclosed subject matter relates to a battery cover or lid, a battery pack such as Li-ion battery pack comprising such a battery cover, methods of making the same, and methods of using the same.

### BACKGROUND

Batteries such as lead-acid batteries and lithium-ion (Li-ion) batteries are used in vehicles such as electric vehicles, hybrid vehicles, and golf carts. For example, Li-ion batteries have become increasingly used as traction batteries in battery-powered equipment, including, without limitation, electric vehicles (EVs) due to their advantages of high energy density, low self-discharge, and long cycle life.

Batteries may include a plurality of cells grouped together as a battery pack. A battery pack is a device for storing and releasing electrical energy, usually comprising multiple battery cells. The battery pack includes battery distribution units that manage the power capacity and functionality of the battery pack. The battery distribution units may be mounted within the outer casing housing the battery pack. The battery pack also includes manual service disconnects (MSD) that allow disconnecting of the high current power circuit of the battery pack, such as for service of the battery pack. The manual service disconnects include a high-current fuse creating a fused electrical path for the battery pack coupling with a high voltage interlock (HVIL) that controls operation of the high current electrical circuit. The high current fuse may have an amp range of between 50 A-200 A.

The manual service disconnect is a switch device used within battery packs or high-voltage distribution assemblies to disconnect high-voltage circuits. This ensures quick separation of high-voltage circuit connections during maintenance or in case of sudden short circuits, safeguarding technicians. Typically installed in the main circuit, MSDs are built with high-voltage fuses and designed with high-voltage interlock features. In case of an external short circuit, the fuse will melt, cutting off the high-voltage circuit; for manual disconnection of high-voltage, the high-voltage interlock is disconnected first, followed by the high-voltage circuit. The design and selection of MSDs are crucial, involving product safety.

However, MSD cannot be used in some applications because of its location, its manual operability, and related high cost. Meanwhile, a battery pack needs to be opened for maintenance. A new design or device is desired to replace MSD connected with a battery pack.

### SUMMARY OF THE INVENTION

A battery cover with connect or disconnect functions, a resulting battery pack, and the methods of making the same, and the methods of using the same are provided.

In accordance with some embodiments, such a battery pack comprises a cover and an interior structure or module.

The cover comprises a cover base providing a top surface of the battery pack, and a first busbar and a second busbar attached with and disposed below the cover base. The first busbar and the second busbar are configured to provide a first offset in height relative to the cover base.

The interior structure comprises a substrate, a first pair of busbar connectors disposed on the substrate and configured to electrically connect with a first plurality of battery cells in a battery module for a first voltage, and a second pair of busbar connectors disposed over the substrate and configured to electrically connect with a second plurality of battery cells in the battery module for a second voltage.

The first voltage is higher than the second voltage. The first voltage is referred as a "high voltage" (HV). The second voltage is referred as a "low voltage" (LV). In some embodiments, the first voltage is higher than 50 volts. For example, the first voltage is in a range of from higher than 50 volts to 70 volts. The second voltage may be in a range of from 0.1 volt to 50 volts.

The first pair of busbar connectors and the second pair of busbar connectors are configured to provide a second offset in height relative to the substrate.

Each busbar connector defines a notch, which is sized and configured to accept and electrically connect with a respective busbar. The first pair of busbar connectors are configured to accept the first busbar. The second pair of busbar connectors are configured to accept the second busbar.

The cover and the interior structure are configured to connect the first pair of busbar connectors and the first busbar before the second pair of busbar connectors and the second busbar are connected, during a connection process when the cover is moved toward the interior structure. The high voltage is connected before the low voltage. The cover and the interior structure are configured to disconnect the second pair of busbar connectors and the second busbar before the first pair of busbar connectors and the first busbar are disconnected during a disconnection process when the cover is moved away from the interior structure. The low voltage is disconnected before the high voltage.

In some embodiments, when the cover is moved toward the interior structure, the cover base and the substrate may be substantially parallel to each other. In some embodiments, when the cover is moved away from the interior structure, the cover base and the substrate may be substantially parallel to each other. This may apply at least when the first pair of busbar connectors accept the first busbar and/or when the second pair of busbar connectors accept the second busbar. Preferably, this applies during the entire connection process and/or during the entire disconnection process. The term "substantially" may allow a deviation from parallel of ±20°, preferably of ±10°, and more preferably of ±5°.

In some embodiments, the first busbar has a height relative to the cover base greater than that of the second busbar. The first pair of busbar connectors may have a height relative to the substrate lower than that of the second busbar connectors.

In some embodiments, the first offset is greater than the second offset.

The offsets can be in any suitable ranges. For example, in some embodiments, each of the first offset and the second offset is in a range of from 1 mm to 20 mm. In some embodiments, each of the first offset and the second offset is in a range of from 1 mm to 10 mm. In some embodiments, each of the first offset and the second offset is in a range of from 1 mm to 5 mm.

The offsets can be also defined by relative dimensions. For example, each of the first offset and the second offset may be in a range of 5% to 15% of a height of the first (or second) pair of busbar connectors relative to the substrate.

In some embodiments, the battery pack further comprises a third busbar attached with and disposed below the cover base, and a third busbar connector disposed on the substrate and configured to accept and electrically connect with the third busbar for ground circuit.

The first plurality of battery cells and the second plurality of battery cells are selected from lithium ion batteries, lead-acid batteries, or any combination thereof.

In some embodiments, the battery pack further comprises a guide blade disposed on the substrate of the interior structure or on the cover base, and a guide with a slot disposed on the cover base or the substrate of the interior structure. The guide may be sized and configured to accept the guide blade.

In another aspect, the present disclosure provides a method of making (manufacturing) the battery cover or the battery as described herein. The method of making the battery pack comprises steps of providing the cover, providing the interior structure, and assembling the cover and the interior structure together to provide the battery pack. The battery pack comprises Li-ion batteries, lead acid batteries, or a combination thereof.

In another aspect, the present disclosure provides a method of using the battery cover or the battery as described herein. Such a method may include a method for connection or disconnection.

In some embodiments, such a method of connecting the battery pack comprises steps of: placing the cover above the interior structure, wherein the first busbar and the second busbar are pointed toward the interior structure, and aligning the cover with the interior structure. The first busbar is placed above the first pair of busbar connectors and the second busbar is placed above the second busbar connectors. Such a method further comprises moving the cover into the interior structure. The moving step comprises: moving the first busbar into the first pair of busbar connectors to provide electrical connection for the first plurality of battery cells; and then moving the second busbar into the second pair of busbar connectors to provide electrical connection for the second plurality of battery cells.

The first busbar may have a height relative to the cover base greater than that of the second busbar. The first pair of busbar connectors may have a height relative to the substrate lower than that of the second busbar connectors. The first offset may be greater than the second offset.

In some embodiments, such a method of disconnecting the battery pack comprises a step of removing the cover from the interior structure. The removing step comprises: disconnecting the second busbar from the second pair of busbar connectors to cut off electrical connection for the second plurality of battery cells, and disconnecting the first busbar from the first pair of busbar connectors to cut off electrical connection for the first plurality of battery cells.

Preferably, the method of disconnecting the battery pack comprises: and then disconnecting the first busbar from the first pair of busbar connectors to cut off electrical connection for the first plurality of battery cells.

The first busbar may have a height relative to the cover base greater than that of the second busbar. The first pair of busbar connectors may have a height relative to the substrate lower than that of the second busbar connectors. The first offset is greater than the second offset.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIG. 1A is a perspective view illustrating an exemplary battery pack in accordance with some embodiments.
FIG. 1B is a diagram illustrating the components and their connections inside the exemplary battery pack of FIG. 1A in accordance with some embodiments.
FIG. 2A is a perspective view illustrating an exemplary busbar connector.
FIG. 2B is an exploded view illustrating the exemplary busbar connector of FIG. 2A.
FIG. 3A is a perspective view illustrating an exemplary interior structure comprising at least two types of busbar connectors including a first type of busbar connectors (for high voltage) and a second type of busbar connectors (for low voltage) inside an exemplary battery pack in accordance with some embodiments.
FIG. 3B is an exploded view illustrating the exemplary interior structure of FIG. 3A.
FIG. 4 is a perspective and upside down view illustrating an exemplary cover in the exemplary battery pack in accordance with some embodiments.
FIG. 5A is a sectional view illustrating a fully disconnected (or separated) state, in which the exemplary cover is disposed above the exemplary interior structure.
FIG. 5B is a sectional view of the structure of FIG. 5A along a direction A-A' illustrating that a first busbar is disposed above the first type of busbar connectors (for high voltage) and a guide is disposed above a guide blade.
FIG. 5C is a sectional view of the structure of FIG. 5A along a direction B-B' illustrating that a second busbar is disposed above the second type of busbar connectors (for low voltage).
FIGS. 6A- 9E are sectional views illustrating a connection process step by step in accordance with some embodiments.

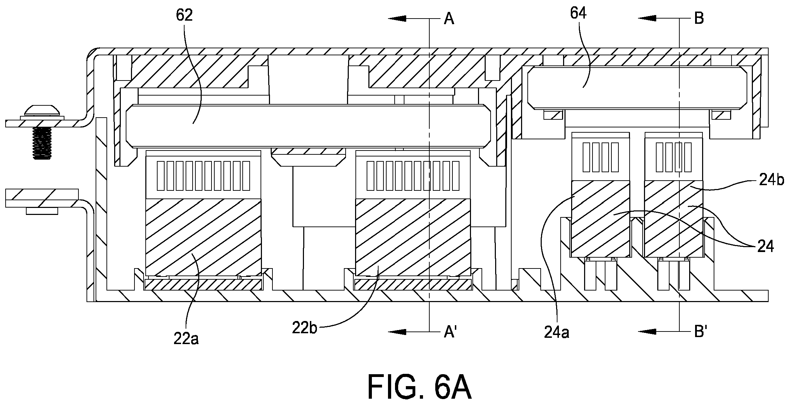

FIG. 6A is a sectional view illustrating that the exemplary cover is pushed toward the exemplary interior structure.

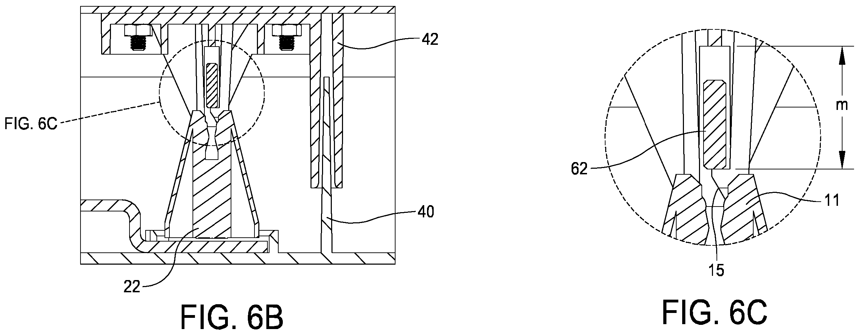

FIG. 6B is a sectional view of the structure of FIG. 6A along a direction A-A' illustrating that the first busbar is disposed above the first type of busbar connectors (for high voltage) and the guide blade is inserted into the guide.
FIG. 6C is a magnified view of the structure of FIG. 6B illustrating that the first busbar is disposed above and disconnected from the first type of busbar connectors.

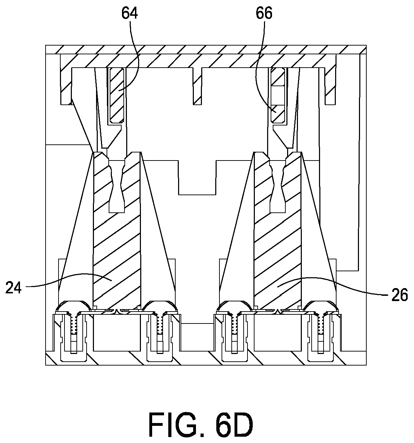

FIG. 6D is a sectional view of the structure of FIG. 6A along a direction B-B' illustrating that the second busbar is disposed above the second type of busbar connectors (for low voltage).

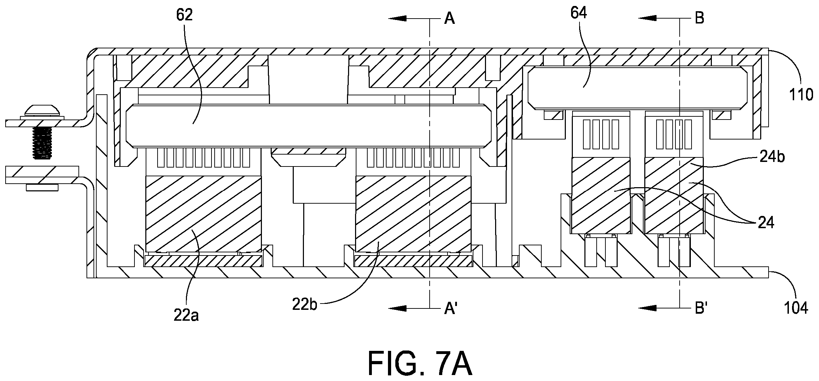

FIG. 7A is a sectional view illustrating that the exemplary cover is pushed further toward the exemplary interior structure.

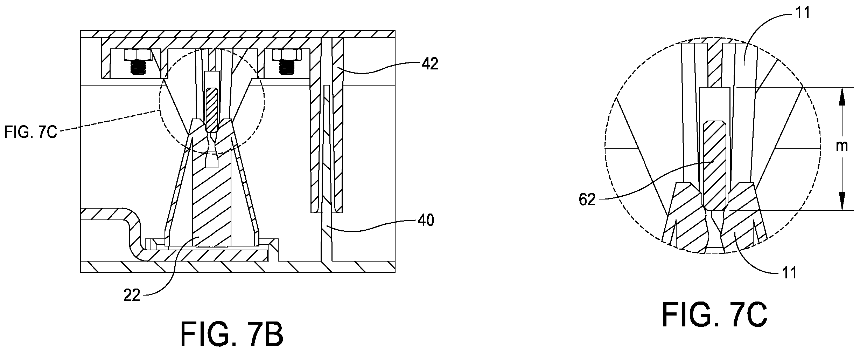

FIG. 7B is a sectional view of the structure of FIG. 7A along a direction A-A' illustrating that the first busbar is pushed into and connected with the first type of busbar connectors (for high voltage) while the guide blade is disposed inside the guide.
FIG. 7C is a magnified view of the structure of FIG. 7B illustrating that the first busbar is partially disposed inside and connected with the first type of busbar connectors.

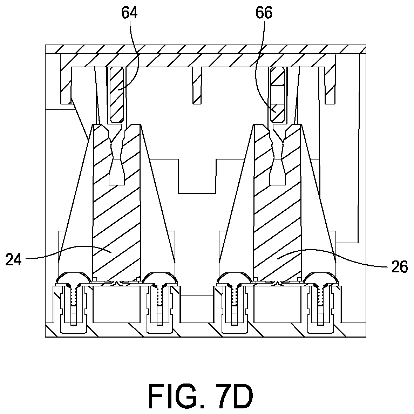

FIG. 7D is a sectional view of the structure of FIG. 7A along a direction B-B' illustrating that the second busbar is moved close to but is not connected with the second type of busbar connectors (for low voltage).

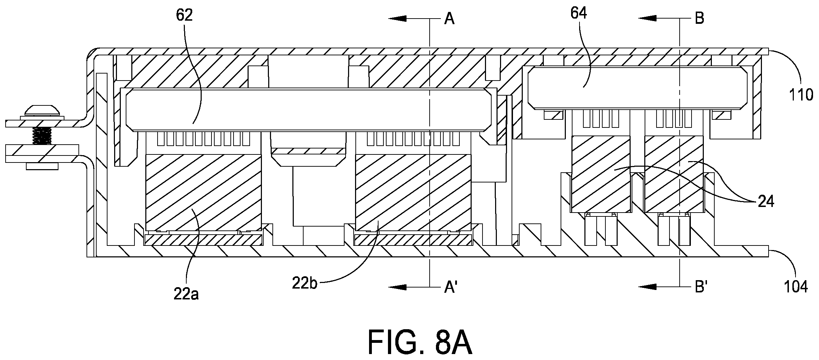

FIG. 8A is a sectional view illustrating that the exemplary cover is pushed further into the exemplary interior structure, and electrical connections are made on both busbars, i.e., for both high voltage and low voltage.

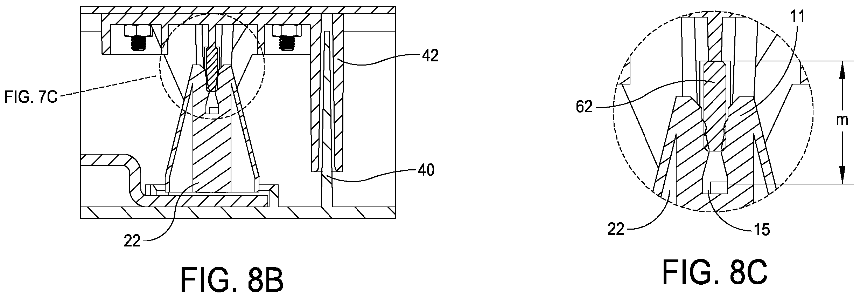

FIG. 8B is a sectional view of the structure of FIG. 8A along a direction A-A' illustrating that the first busbar is connected with the first type of busbar connectors while the guide blade is disposed inside the guide.
FIG. 8C is a magnified view of the structure of FIG. 8B illustrating that the first busbar is connected with the first type of busbar connectors.

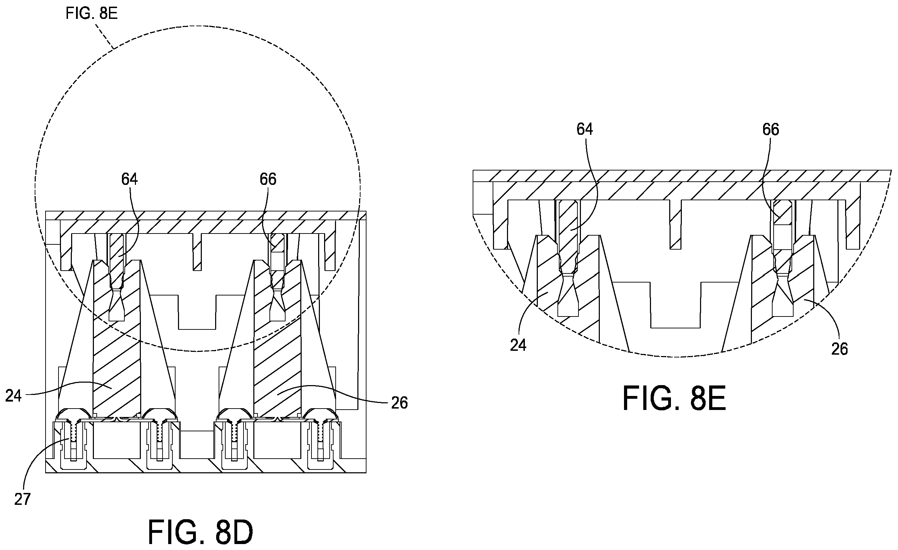

FIG. 8D is a sectional view of the structure of FIG. 8A along a direction B-B' illustrating that the second busbar is partially pushed into and is connected with the second type of busbar connectors (for low voltage).
FIG. 8E is a magnified view of the structure of FIG. 8D.

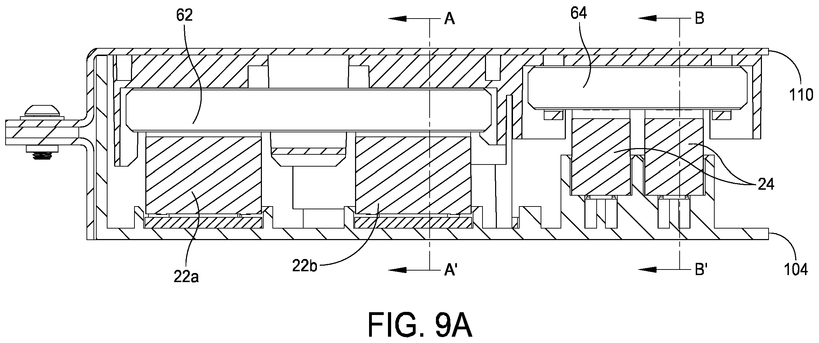

FIG. 9A is a sectional view illustrating that the exemplary cover is fully inside the exemplary interior structure, and complete electrical connections are made on both busbars, i.e., for both high voltage and low voltage.

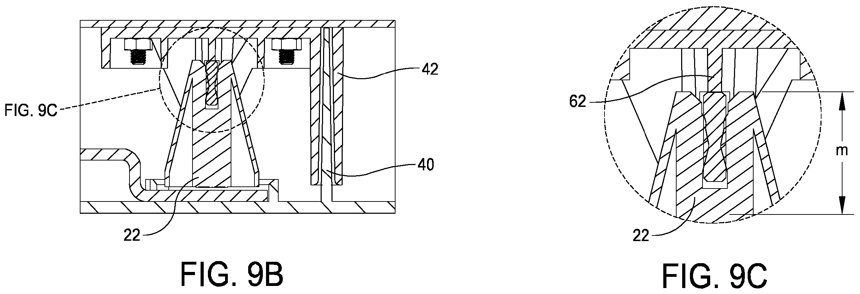

FIG. 9B is a sectional view of the structure of FIG. 9A along a direction A-A' illustrating that the first busbar is fully inside the first type of busbar connectors while the guide blade is fully inside the guide.
FIG. 9C is a magnified view of the structure of FIG. 9B.

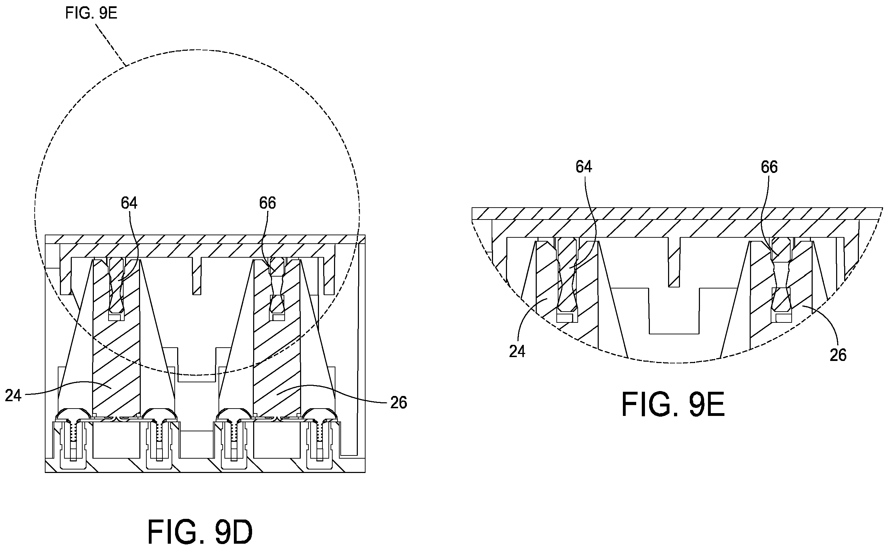

FIG. 9D is a sectional view of the structure of FIG. 9A along a direction B-B' illustrating that the second busbar is fully inside and connected with the second type of busbar connectors (for low voltage).
FIG. 9E is a magnified view of the structure of FIG. 9D.

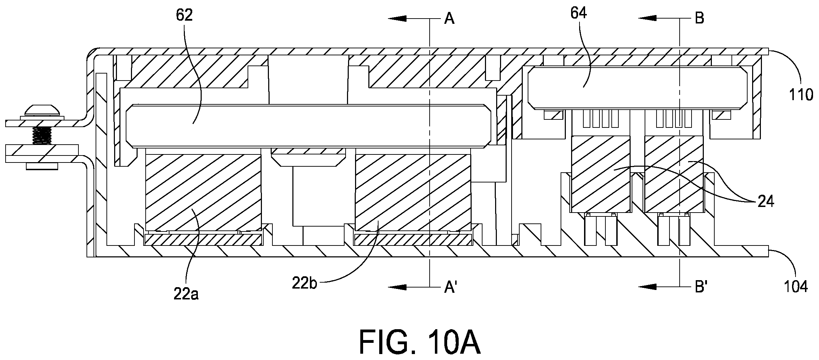

FIGS. 10A-13C are sectional views illustrating a disconnection process step by step in accordance with some embodiments.
FIG. 10A is a sectional view illustrating that the exemplary cover is raised from the exemplary interior structure at the initial stage of the disconnection process.

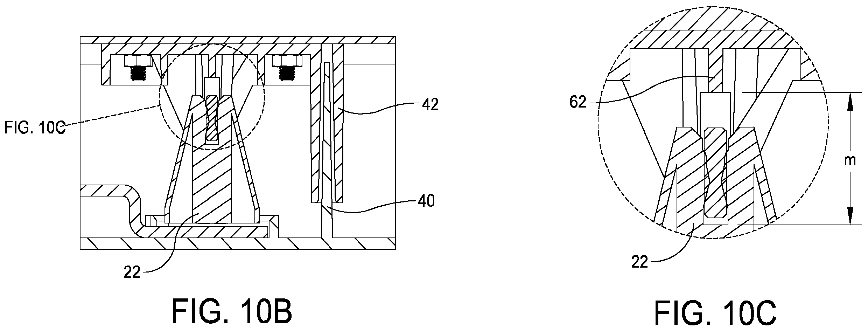

FIG. 10B is a sectional view of the structure of FIG. 10A along a direction A-A' illustrating that the first busbar is disposed inside the first type of busbar connectors, and the guide blade is inside the guide.
FIG. 10C is a magnified view of the structure of FIG. 10B.

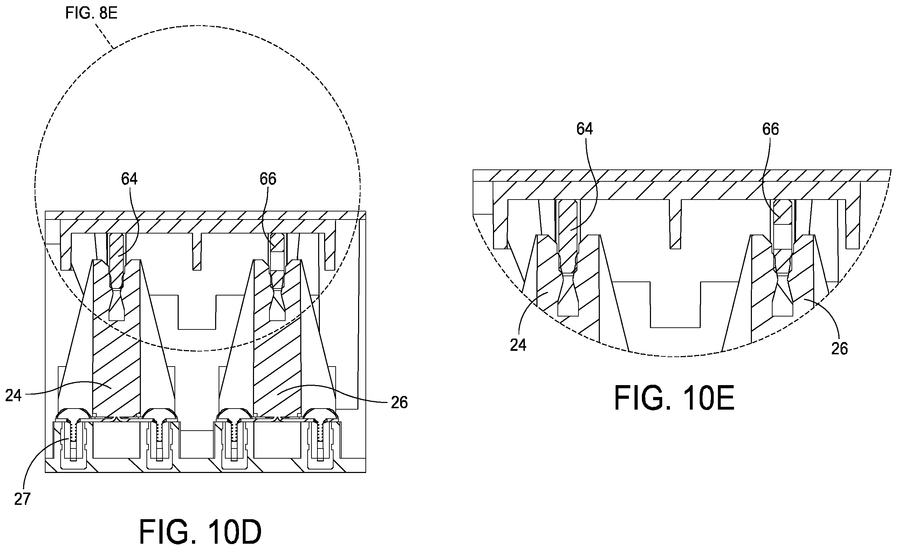

FIG. 10D is a sectional view of the structure of FIG. 10A along a direction B-B' illustrating the second busbar starts to be disconnected from the second type of busbar connectors (for low voltage).
FIG. 10E is a magnified view of the structure of FIG. 10D illustrating that the second busbar is partially connected with the second type of busbar connectors.

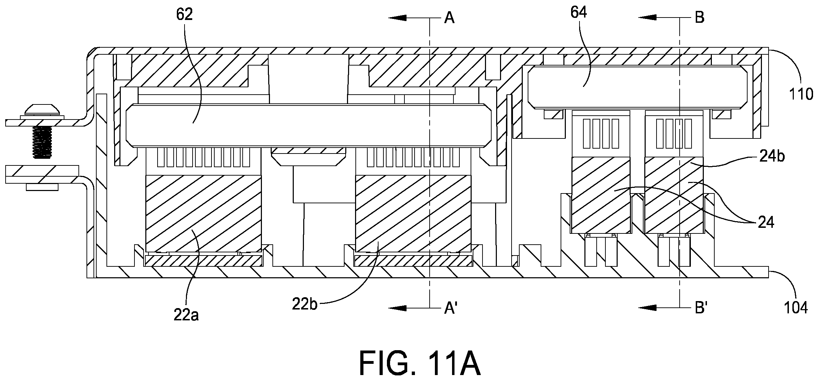

FIG. 11A is a sectional view illustrating that the exemplary cover is further raised from the exemplary interior structure in the middle of the disconnection process.

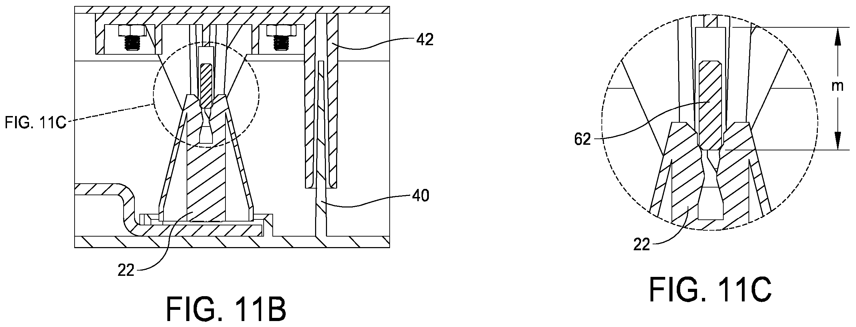

FIG. 11B is a sectional view of the structure of FIG. 11A along a direction A-A' illustrating that the first busbar starts to be disconnected from and is partially disposed inside the first type of busbar connectors (for high voltage).
FIG. 11C is a magnified view of the structure of FIG. 11B.

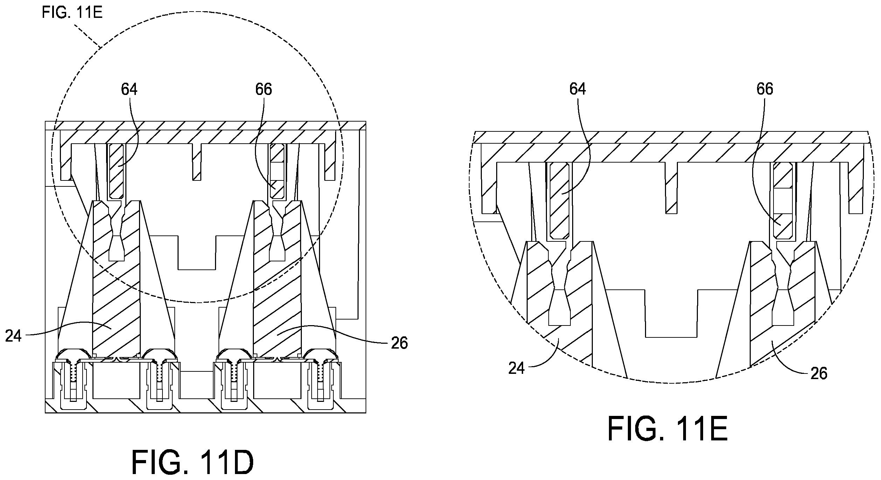

FIG. 11D is a sectional view of the structure of FIG. 11A along a direction B-B' illustrating the second busbar is fully disconnected from the second type of busbar connectors (for low voltage).
FIG. 11E is a magnified view of the structure of FIG. 10D.

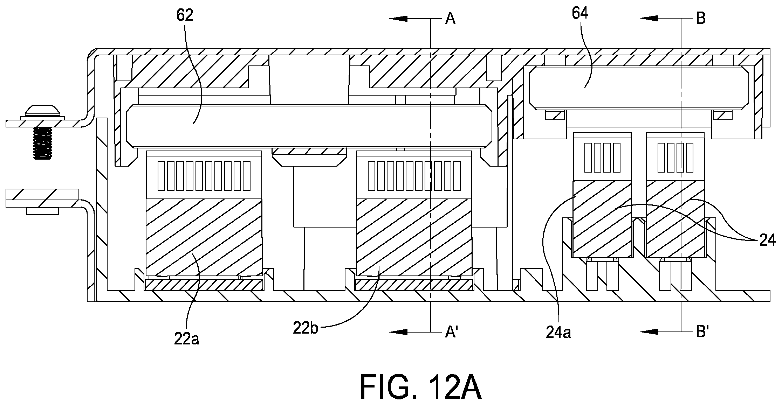

FIG. 12A is a sectional view illustrating that the exemplary cover is further raised from the exemplary interior structure, and both busbars are disconnected.

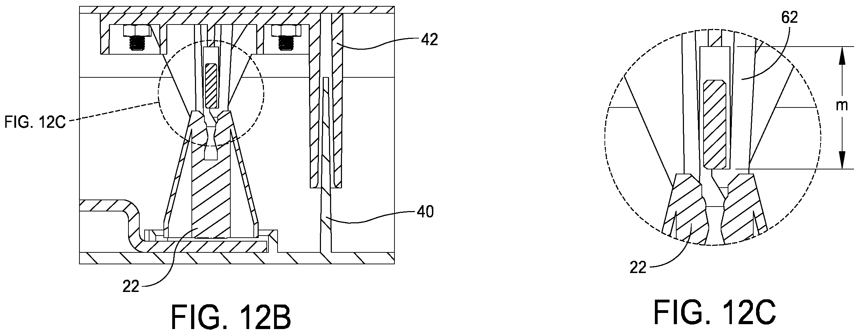

FIG. 12B is a sectional view of the structure of FIG. 12A along a direction A-A' illustrating that the first busbar is disconnected from the first type of busbar connectors (for high voltage).
FIG. 12C is a magnified view of the structure of FIG. 12B.

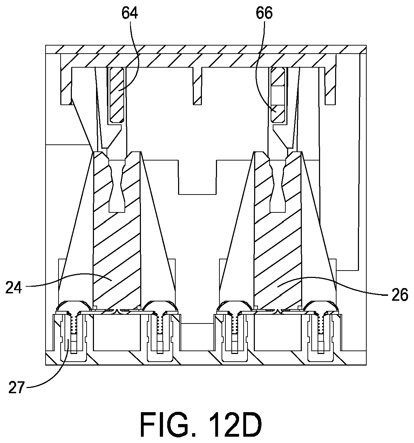

FIG. 12D is a sectional view of the structure of FIG. 12A along a direction B-B' illustrating that the second busbar is disconnected from the second type of busbar connectors (for low voltage).

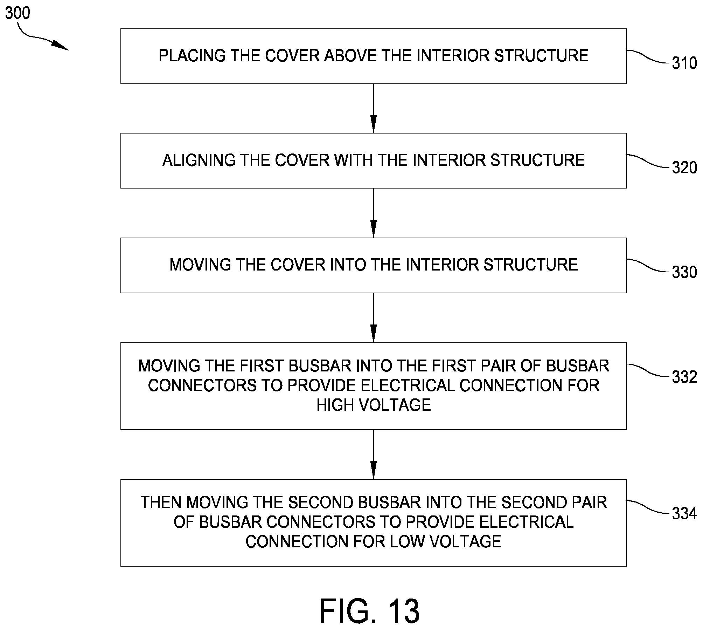

FIG. 13 is a flow diagram illustrating the connection process in accordance with some embodiments.

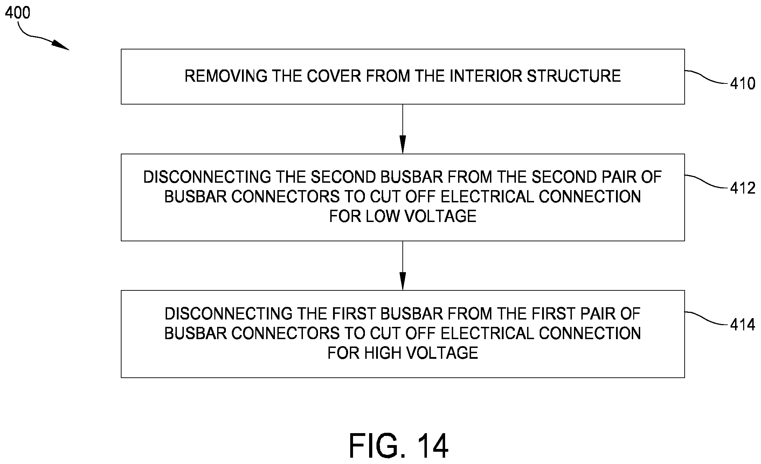

FIG. 14 is a flow diagram illustrating the disconnection process in accordance with some embodiments.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For purposes of the description hereinafter, it is to be understood that the embodiments described below may assume alternative variations and embodiments. It is also to be understood that the specific articles, compositions, and/or processes described herein are exemplary and should not be considered as limiting.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

The terms "a battery pack assembly" and "a battery pack" are used interchangeably herein.

The terms "a battery cover" and "a battery lid" are used interchangeably herein. The battery cover or lid provided in the present disclosure comprises connects or disconnects. So the battery cover or lid is also called the battery connect or disconnect.

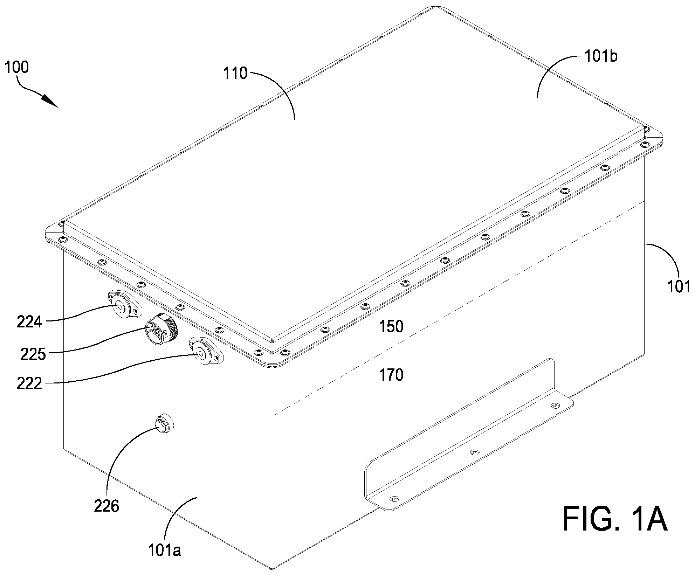

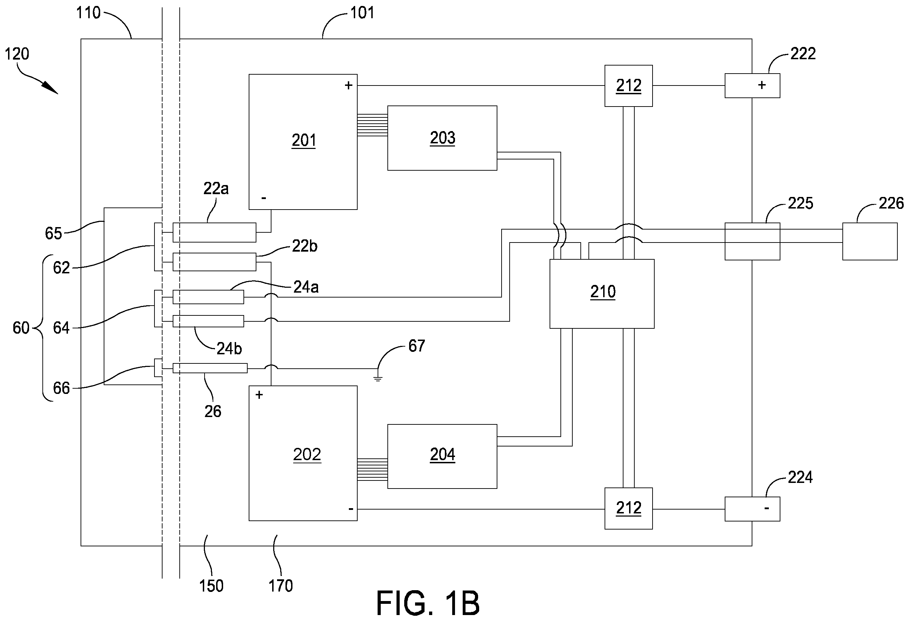

In FIGS. 1-12, like items are indicated by like reference numerals, and for brevity, descriptions of the structure, provided above with reference to the preceding figures, are not repeated. The methods described in FIGS. 13-14 are described with reference to the exemplary structures described in FIGS. 1-12.

The present disclosure provides a battery cover or lid with connect or disconnect functions, a resulting battery pack, and the methods of making the same, and the methods of using the same.

One objective of the present disclosure is to provide a battery cover or lid for a battery pack such as a lithium-ion battery pack (or module). The battery cover comprises connects or disconnects, and may be used to replace manual service disconnects (MSD).

The present disclosure provides a design and a method for disabling a high-voltage battery upon removal of the lid for servicing. The design includes disconnects for both high voltage and low voltage. These two disconnects are designed such that upon removal, the low-voltage components disconnect first and the high-voltage components disconnect last. Upon placement, the high-voltage components are connected first, and the low-voltage components are connected last.

The products described herein are used to prevent high voltage being present when a battery cover is opened for inspection or service. The battery pack can be readily assembled at relatively low cost of manufacturing.

Referring to FIG. 1A, an exemplary battery pack 100 in accordance with some embodiments is illustrated. Such a battery pack 100 comprises a cover 110 and an interior structure or module 150. The battery pack 100 also comprises a battery module 170, which comprises a plurality of battery cells. The plurality of battery cells may be based on any suitable chemistry, and may be Li-ion batteries, lead-acid batteries, or any combination thereof. The battery cells may be connected in series or parallel, and are aligned in parallel with each other. The battery cells may be group based on voltages, for example, high and low voltages as described herein. The battery pack also includes exterior walls 101, which, together with the cover 110 provide an enclosure of the battery pack 100. On one side of exterior walls 101a, referred as a front side of the battery pack, comprises external connectors for electrical connections to an external device (not shown). The interior structure 150 and the battery module 170 are disposed inside the enclosure. In some embodiments, the battery module 170 may be disposed below the interior structure 150, or may be disposed adjacent to the interior structure 150. The battery pack may also include at least one battery management system (BMS) and a central controller.

Referring to FIG. 1B, an exemplary diagram 120 is used to illustrate the components and the connections inside the exemplary battery pack 100 in accordance with some embodiments.

As described herein, interior structure 150 comprises at least two types of busbar connectors, which include a first type of busbar connectors such as a pair of the first type of busbar connectors 22a, 22b, and a second type of busbar connectors such as a pair of the second type of busbar connectors 24a, 24b. The interior structure 150 also includes a third type of busbar connector 26. The cover 110 comprises three busbars 60, which include a first busbar 62 and a second busbar 64, corresponding to the pair of busbar connectors 22a, 22b and 24a, 24b, respectively. The cover may include a busbar holder 65 and a third busbar 66, corresponding to the busbar connector 26.

The busbar connectors 22a, 22b are connected with batteries 201, 202 for providing a high voltage. The batteries 201, 202 are connected with a battery management system 203, 204, respectively, which are connected with a central controller 210. The busbar connectors 24a, 24b are connected with at least one battery cells for providing a low voltage. As shown in the diagram 120, the battery pack 100 may further include contactors 212.

The battery pack 100 also includes a positive terminal 222, a negative terminal 224, a CAN connector 225, and a switch 226 to turn on or off the battery pack 100. The terminal 222 and 224, the CAN connector 225, and the switch 226 are shown on the front side of the battery pack 100 (FIG. 1A).

The busbars and the busbar connectors described herein comprise a conductive materials such as metal to establish electrical connections. The busbar connectors may be partially coated with an insulative material.

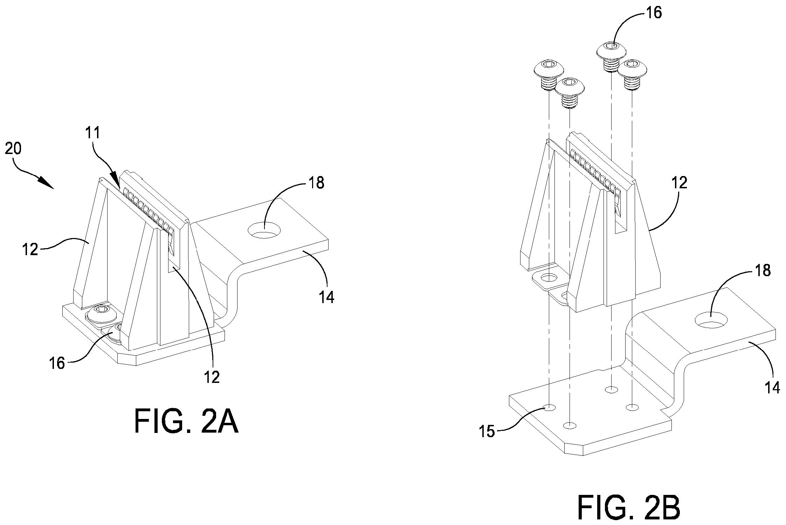

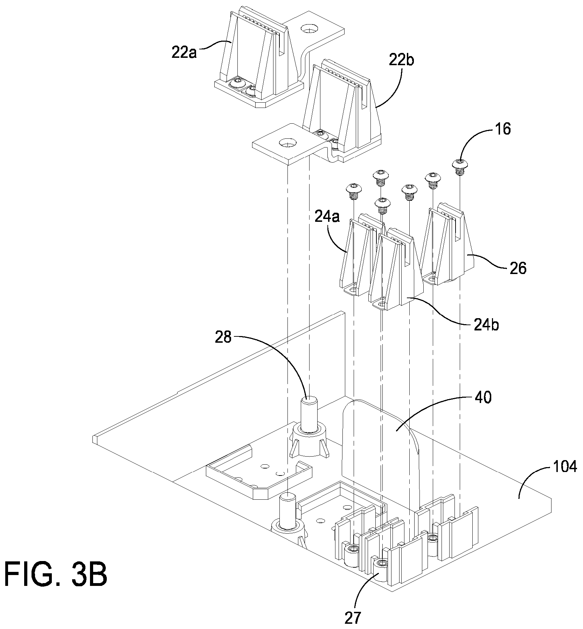

Referring to FIGS. 2A-2B, an exemplary busbar connector 20 is illustrated. The busbar connector 20 may include a top portion 12 and a base portion 14, which are connected together using screws 16 disposed inside holes 15 on the base portion 14. In the top portion 12, each busbar connector 20 defines a notch 11, which is sized and configured to accept and electrically connect with a respective busbar 60. The base portion 14 comprises a conductive material and is used for connection with a battery such as battery 201 or 202. The holes 18 on the base portion 14 are used for screws or connection stub 28 (FIG. 3B).

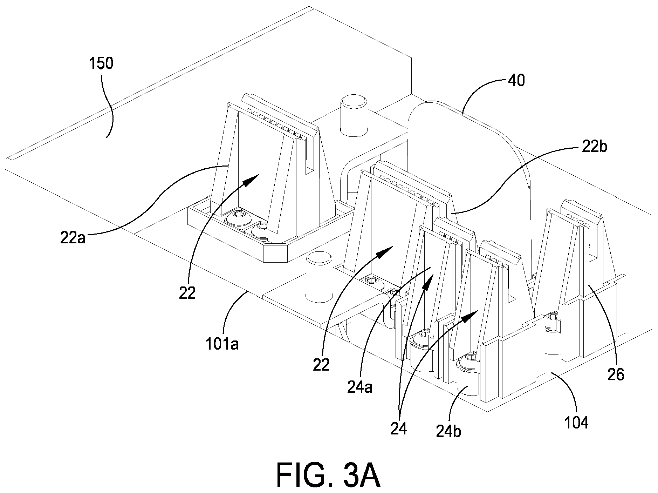

Referring to FIGS. 3A-3B, the exemplary interior structure 150 comprises a first type of busbar connectors 22 and a second type of busbar connectors 24. The interior structure 150 comprises a substrate 104, a first pair of busbar connectors 22a, 22b disposed on the substrate 104 and configured to electrically connect with a first plurality of battery cells in the battery module 170 for a first voltage, and a second pair of busbar connectors 24a, 24b disposed over the substrate 104 and configured to electrically connect with a second plurality of battery cells in the battery module 170 for a second voltage.

The first voltage is higher than the second voltage. The first voltage is referred as a "high voltage" (HV). The second voltage is referred as a "low voltage" (LV). In some embodiments, the first voltage is higher than 50 volts. For example, the first voltage is in a range of from higher than 50 volts to 70 volts. The second voltage in a range of from 0.1 volt to 50 volts.

The first plurality of battery cells and the second plurality of battery cells are selected from lithium ion batteries, lead-acid batteries, or any combination thereof.

The busbar connectors 22 and 24 may have the same dimensions such as height, or the busbar connectors 24 may have slightly smaller dimensions. In some embodiments, a support 27 is disposed between the substrate 104 and one of the second type of busbar connectors 24.

In some embodiments, the interior structure 150 may further comprise a guide blade 40 and a third busbar connector 26 disposed on the substrate 104.

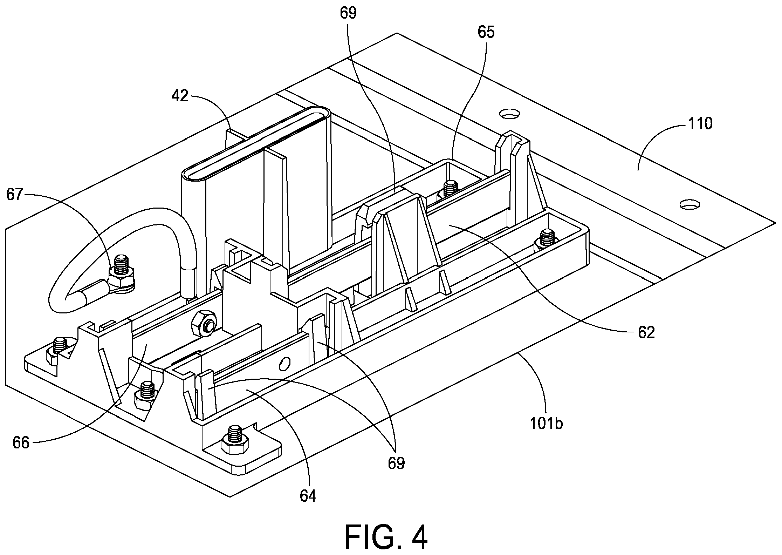

Referring to FIG. 4, an exemplary cover 110 is viewed from upside down. The cover 110 comprises a cover base 101b providing a top surface of the battery pack 100, and a first busbar 62 and a second busbar 64 attached with and disposed below the cover base 101b.

The first pair of busbar connectors 22a, 22b are configured to accept the first busbar 62. The second pair of busbar connectors 24a, 24b are configured to accept the second busbar 64.

In some embodiments, the cover 110 comprises a third busbar 66 attached with and disposed below the cover base 101b. The third busbar connector 26 is configured to accept and electrically connect with the third busbar 66 for ground circuit.

In some embodiments, the cover 110 includes a guide 42 with a slot disposed on the cover base or the substrate of the interior structure. The guide 42 is sized and configured to accept the guide blade 40.

The cover may also include a busbar holder 65, a ground connection 67, and snaps 69. At least two snaps 69 correspond to one busbar and are configured to hold the busbar. The at least two snaps 69 may be parallel to each other. In some embodiments, the busbar is also configured to move between at least two snaps.

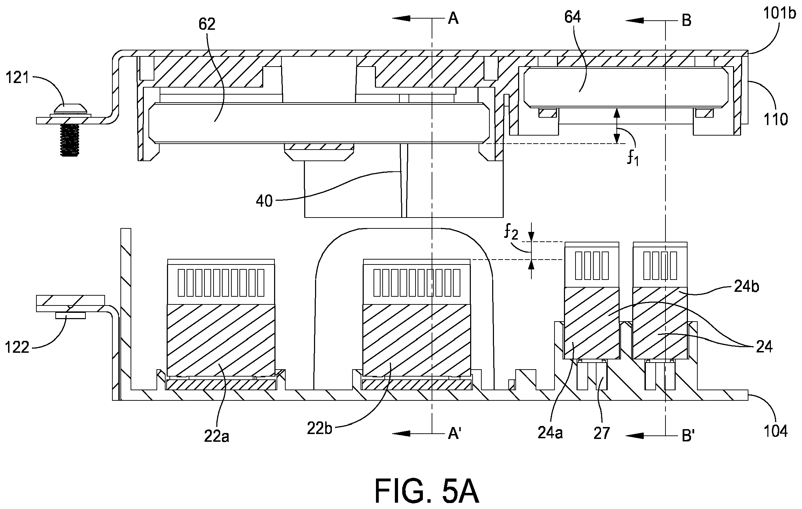

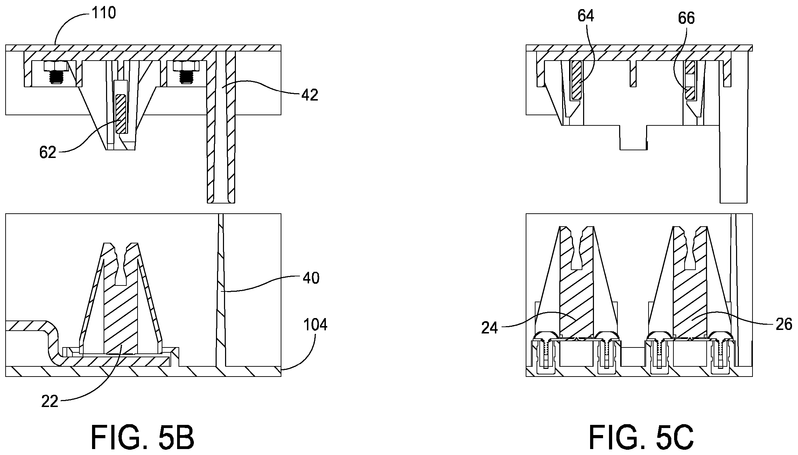

Referring to FIGS. 5A-5B, the battery pack 100 is fully disconnected while the cover and the interior structure are separated. FIG. 5B is a sectional view of the structure of FIG. 5A along a direction A-A'. FIG. 5C is a sectional view of the structure of FIG. 5A along a direction B-B'. The first busbar 62 is disposed above the first type of busbar connectors 22a and 22b and a guide 42 is disposed above a guide blade 40. The second busbar 64 is disposed above the second type of busbar connectors 24a, 24b. The cover 110 can be tightened later using the screws 121 through holes 122.

As illustrated in FIG. 5A, the first busbar 62 and the second busbar 64 are configured to provide a first offset (f1) in height relative to the cover base 101b. In some embodiments, the second busbar 64 is higher than the first busbar 62. In another word, the second busbar 64 is closer to the cover base 101b.

In addition, the first pair of busbar connectors 22a, 22b and the second pair of busbar connectors 24a, 24b are configured to provide a second offset (f2) in height relative to the substrate. In some embodiments, the first pair of busbar connectors 22a, 22b are lower than the second pair of busbar connectors 24a, 24b in height. In another word, the first pair of busbar connectors 22a, 22b its top surface closer to the substrate 104, compared to the second pair of busbar connectors 24a, 24b.

Referring to FIG. 5A, in some embodiments, the first busbar 62 has a height relative to the cover base 101b greater than that of the second busbar 64. The first pair of busbar connectors 22 have a height relative to the substrate lower than that of the second busbar connectors 24.

In some embodiments, the first offset (f1) is greater than the second offset (f2).

The offsets can be in any suitable ranges. For example, in some embodiments, each of the first offset and the second offset is in a range of from 1 mm to 20 mm. In some embodiments, each of the first offset and the second offset is in a range of from 1 mm to 10 mm. In some embodiments, each of the first offset and the second offset is in a range of from 1 mm to 5 mm.

The offsets can be also defined by relative dimensions. For example, each of the first offset and the second offset may be in a range of 5% to 15% of a height of the first (or second) pair of busbar connectors relative to the substrate.

Referring to FIGS. 5A-5C, the cover 110 and the interior structure 150 are configured to connect the first pair of busbar connectors 22a, 22b and the first busbar 62 before the second pair of busbar connectors 24a, 24b and the second busbar 64 are connected, during a connection process when the cover 110 is moved toward the interior structure 150. The high voltage portion is connected before the low voltage portion.

The cover 110 and the interior structure 150 are configured to disconnect the second pair of busbar connectors 24a, 24b and the second busbar 64 before the first pair of busbar connectors 22a, 22b and the first busbar 62 are disconnected during a disconnection process when the cover 110 is moved away the interior structure 150. The low-voltage portion is disconnected before the high-voltage portion.

As shown in FIG. 5B, the cover 110 includes a guide 42 with a slot disposed on the cover base. The guide 42 is sized and configured to accept the guide blade 40 on the substrate 104 of the interior structure 150. In some other embodiments, the guide 42 can be disposed on the substrate 104, and the guide blade 40 can be disposed on the cover 110. The cover 110 also include a third busbar 66, which matches with the third busbar connector 26.

The locations of the guide and the guide blade described herein may be interchangeable. The guide and the guide blade have complementary structures so that they can form a male-female interlocking structure. The guide defines a notch so that the guide blade can be inserted into the guide. For example, in some embodiments, as shown in the figures, the guide may be on the battery cover, and the guide blade may be in the interior structure. In some other embodiments, the guide blade may be on the battery cover, and the guide may be in the interior structure.

The designs of the battery cover and the interior structure may be interchangeable, or the locations of the busbars and the busbar connectors described herein may be interchangeable. The busbar connectors are configured to reversibly accept and hold the respective busbars after connected. For example, in some embodiments, as shown in the figures, the busbars may be on the battery cover, and the busbar connectors may be in the interior structure. In some other embodiments, the busbar connectors may be on the battery cover, and the busbars may be in the interior structure.

In another aspect, the present disclosure provides a method of making the battery cover or the battery as described herein. The method of making the battery pack 100 comprises steps of providing the cover 110, providing the interior structure 150, and assembling the cover 110 and the interior structure 150 together to provide the battery pack 100. The battery pack 100 comprises Li-ion batteries, lead acid batteries, or a combination thereof.

Referring to FIGS. 6A- 9E, a connection process is illustrated step by step in accordance with some embodiments.

FIG. 6A illustrates that the exemplary cover 110 is pushed toward the exemplary interior structure 150. FIG. 6B is a sectional view of the structure of FIG. 6A along a direction A-A'. FIG. 6C is a magnified view of the structure of FIG. 6B. FIG. 6D is a sectional view of the structure of FIG. 6A along a direction B-B'.

At this initial stage of the connection process, the first busbar 62 is disposed above the first type of busbar connectors 22a, 22b, which are for high-voltage connection. The guide blade 40 is inserted into the guide 42. The first busbar 62 is disposed above and disconnected from the first type of busbar connectors 22, which the first busbar 62 is close to the busbar connectors 22. The distance that the first busbar 62 travels is illustrated as "m" in FIG. 6C and other subsequent drawings.

As illustrated in FIG. 6D, the second busbar 64 is disposed further above the second type of busbar connectors 24, which are for the low-voltage connection. The low-voltage portion stay disconnected. The third busbar 66 is also disposed further above the third type of busbar connector 26, and stays disconnected.

Referring to FIGS. 7A-7D, the cover 110 is pushed further toward the interior structure 150. FIG. 7B is a sectional view of the structure of FIG. 7A along a direction A-A'.

FIG. 7C is a magnified view of the structure of FIG. 7B. FIG. 7D is a sectional view of the structure of FIG. 7A along a direction B-B'.

The first busbar 62 is pushed into and connected with the first type of busbar connectors 22. The first busbar 62 is partially disposed inside and connected with the first type of busbar connectors 22. The high voltage connection is obtained. The guide blade 40 is further pushed into the guide 42.

The second busbar 64 is moved close to but is not connected with the second type of busbar connectors 24. So the low-voltage portion stays disconnected.

Referring to FIGS. 8A-8E, the cover 110 is pushed further into the interior structure 150. Electrical connections are made on both busbars, i.e., for both high voltage and low voltage. FIG. 8B is a sectional view of the structure of FIG. 8A along a direction A-A'. FIG. 8C is a magnified view of the structure of FIG. 8B. FIG. 8D is a sectional view of the structure of FIG. 8A along a direction B-B'. FIG. 8E is a magnified view of the structure of FIG. 8D.

The first busbar 62 is connected with the first type of busbar connectors 22 while the guide blade 40 is disposed inside the guide 42. The second busbar 64 is partially pushed into and is connected with the second type of busbar connectors 24. The initial low-voltage connection is obtained.

Referring to FIGS. 9A-9E, the cover 110 is pushed fully inside the interior structure 150. Complete electrical connections are made on both busbars, i.e., for both high voltage and low voltage. The exterior enclosure can be tightly connected using screws.

FIG. 9B is a sectional view of the structure of FIG. 9A along a direction A-A'. FIG. 9C is a magnified view of the structure of FIG. 9B. The first busbar 62 is fully inside the first type of busbar connectors 22. The guide blade 40 is fully inside the guide 42.

FIG. 9D is a sectional view of the structure of FIG. 9A along a direction B-B'. FIG. 9E is a magnified view of the structure of FIG. 9D. The second busbar 64 is fully inside and connected with the second type of busbar connectors 24. The third busbar 66 is also fully inside and connected with the third busbar connector 26.

The minimum depth of the busbar needs to travel into the slot for full electrical connection can be adjusted based on the design and related dimensions. For example, when the overall height of the first type of busbar connectors 22 is 35.2 mm. The slot depth in the connectors for the busbar to go into is 13.2 mm. The minimum depth the busbar needs to travel into the slot for full electrical connection is about 8 mm. The offsets may be in a range of from 1 mm to 5 mm.

In some embodiments, the notch 11 of the first type of busbar connectors 22 may have a depth greater than the height of the first busbar 62, and may be also greater than the depth of the notch of the second type of busbar connectors 24. In this way, there is more room for the first busbar 62 to move before the complete low-voltage connection is obtained.

The screws 120 may be tightened after the connection process is finished, and will be loosened at the beginning of the disconnection process. During the connection or disconnection process, the cover moves downward or upward at a direction normal to its plane or the substrate 104.

In another aspect, the present disclosure provides a method of using the battery cover or the battery as described herein. Such a method may include a method for connection or disconnection.

In some embodiments, such a method of connecting the battery pack comprises steps of: placing the cover above the interior structure, wherein the first busbar and the second busbar are pointed toward the interior structure; and aligning the cover with the interior structure. The first busbar is placed above the first pair of busbar connectors and the second busbar is placed above the second busbar connectors. Such a method further comprises moving the cover into the interior structure. The moving step comprises: moving the first busbar into the first pair of busbar connectors to provide electrical connection for the first plurality of battery cells; and then moving the second busbar into the second pair of busbar connectors to provide electrical connection for the second plurality of battery cells.

The present disclosure provides a product and a mechanical method to disconnect a high-voltage battery into two separate lower voltage batteries upon removal of the enclosure cover of the battery. A low-voltage disconnect is also present and provides a means to communicate the status of the battery lid to the battery management system (BMS) as well as acts as an interlock to the high-voltage contactors. Another disconnect is present that grounds the case to the battery enclosure or a resulting system.

A disconnect comprises two busbar connectors on the battery pack and a busbar on the cover to complete the connection between the two busbar connectors. Each busbar is held in place with plastic snaps that are part of the busbar holder. The busbars are allowed to float within the holder to ease connection line up. The high-voltage busbar is also allowed additional movement along its width so that it will remain connected as one starts to pull off the cover until the low-voltage disconnect has disconnected. Once the low-voltage disconnect has disconnected, the high-voltage busbar will reach its end of allowable travel and will then disconnect. When placing the cover, this process is reversed and the high voltage disconnect will make contact first followed by the low voltage busbar.

Referring to FIGS. 10A-13C, a disconnection process is illustrated step by step in accordance with some embodiments. The disconnection process is opposite to the connection process.

Referring to FIGS. 10A-10E, the cover 110 is raised from the interior structure 150 at the initial stage of the disconnection process. FIG. 10B is a sectional view of the structure of FIG. 10A along a direction A-A'. FIG. 10C is a magnified view of the structure of FIG. 10B. On the high-voltage side, the first busbar 62 is disposed inside the first type of busbar connectors 22, and the guide blade 40 is inside the guide 42.

FIG. 10D is a sectional view of the structure of FIG. 10A along a direction B-B'. FIG. 10E is a magnified view of the structure of FIG. 10D. On the low-voltage side, the second busbar 64 starts to be disconnected from the second type of busbar connectors 24. The second busbar 64 is partially connected with the second type of busbar connectors 24.

Referring to FIGS. 11A-11E, the cover 110 is further raised from the interior structure 150 in the middle of the disconnection process.

FIG. 11B is a sectional view of the structure of FIG. 11A along a direction A-A'. FIG. 11C is a magnified view of the structure of FIG. 11B. The first busbar 62 starts to be disconnected from and is partially disposed inside the first type of busbar connectors (for high voltage).

FIG. 11D is a sectional view of the structure of FIG. 11A along a direction B-B'. FIG. 11E is a magnified view of the structure of FIG. 10D. The second busbar 64 is fully disconnected from the second type of busbar connectors 24.

Referring to FIGS. 12A-12D, the cover 110 is further raised from the interior structure 150, and both busbars are disconnected.

FIG. 12B is a sectional view of the structure of FIG. 12A along a direction A-A'. FIG. 12C is a magnified view of the structure of FIG. 12B. Te first busbar 62 is disconnected from the first type of busbar connectors 22. FIG. 12D is a sectional view of the structure of FIG. 12A along a direction B-B'. The second busbar 64 is disconnected from the second type of busbar connectors 24.

The busbars illustrated in the drawings are straight. However, they can be in other shapes, for example, in a zig zag form, which will help prevent users from bypassing the disconnect during servicing. Security screws and warnings are used to prevent this and the battery enclosure should only be opened by qualifying technicians.

The present disclosure provides a method of using the battery pack. Referring to FIG. 13, the connection process is illustrated in a diagram.

In some embodiments, such a method 300 of connecting the battery pack comprises steps 310, 320 and 330.

At step 310, the cover 110 is placed above the interior structure 150. The first busbar and the second busbar are pointed toward the interior structure.

At step 320, the cover 110 is aligned with the interior structure 150. The first busbar is placed above the first pair of busbar connectors and the second busbar is placed above the second busbar connectors.

At step 330, the cover 110 moved (or pushed) into the interior structure 150. The moving step comprises steps 332 and 334. At step 332, the first busbar is moved into the first pair of busbar connectors to provide electrical connection for the first plurality of battery cells, i.e., the high-voltage portion. At step 334, which occurs after step 332, the second busbar is moved into the second pair of busbar connectors to provide electrical connection for the second plurality of battery cells, i.e., the low-voltage portion.

The present disclosure also provides a method of using the battery pack involving disconnection. Referring to FIG. 14, the disconnection process is illustrated in a diagram.

In some embodiments, such a method 400 of disconnecting the battery pack comprises a step 410 of removing the cover from the interior structure. Step 410 may include steps 412 and 414. At step 412, the second busbar is disconnected from the second pair of busbar connectors to cut off electrical connection for the second plurality of battery cells, i.e., the low-voltage portion. At step 414, the first busbar is disconnected from the first pair of busbar connectors to cut off electrical connection for the first plurality of battery cells, i.e., the high-voltage portion.

In some embodiments, the battery pack comprises a controller (not shown), which may be loaded with a program or a software to perform the methods of using the battery cover and the battery pack described herein.

The methods and system described herein may be at least partially embodied in the form of computer-implemented processes and apparatus for practicing those processes. The disclosed methods may also be at least partially embodied in the form of tangible, non-transient machine readable storage media encoded with computer program code. The media may include, for example, RAMs, ROMs, CD-ROMs, DVD-ROMs, BD-ROMs, hard disk drives, flash memories, or any other non-transient machine-readable storage medium, or any combination of these mediums, wherein, when the computer program code is loaded into and executed by a computer, the computer becomes an apparatus for practicing the method. The methods may also be at least partially embodied in the form of a computer into which computer program code is loaded and/or executed, such that, the computer becomes an apparatus for practicing the methods. When implemented on a general-purpose processor, the computer program code segments configure the processor to create specific logic circuits. The methods may alternatively be at least partially embodied in a digital signal processor formed of application specific integrated circuits for performing the methods.

The products and the method provided in the present disclosure has many advantages, for example, good performance, relatively simple design, and a low cost to be manufactured. The design is easily assembled with good alignment, and is easy to use including connections and disconnections. The design allows for nullification of a high voltage environment upon removal of the battery enclosure for service. No MSD is needed. The battery cover has a unique design good for a battery module, particularly Li-ion battery packs.

Suitable applications of the battery pack include, but are not limited to, light electric vehicles (LEV), material handling (MH), aerial work platforms (AWP), marine, RV, off-Grid, solar, E-Bikes, any other battery applications for medical, leisure sports and other suitable activities. For example, the battery pack may be one for golf carts, and may have a voltage above 60 V, for example, 72 V.

Although the subject matter has been described in terms of exemplary embodiments, it is not limited thereto. Rather, the appended claims should be construed broadly, to include other variants and embodiments, which may be made by those skilled in the art.

## Claims

1. A battery pack (100) comprising:
a cover (110) comprising a cover base (101b) providing a top surface of the battery pack (100), and a first busbar (62) and a second busbar (64) attached with and disposed below the cover base (101b), wherein the first busbar (62) and the second busbar (64) are configured to provide a first offset (f1) in height relative to the cover base (101b); and
an interior structure (150) comprising a substrate (104), a first pair of busbar connectors (22a, 22b) disposed on the substrate (104) and configured to electrically connect with a first plurality of battery cells in a battery module (170) for a first voltage, and a second pair of busbar connectors (24a, 24b) disposed over the substrate (104) and configured to electrically connect with a second plurality of battery cells in the battery module (170) for a second voltage, wherein the first voltage is higher than the second voltage, each busbar connector (22a, 22b; 24a, 24b) defines a notch (11) sized and configured to accept and electrically connect with a respective busbar (62, 64), and the first pair of busbar connectors (22a, 22b) and the second pair of busbar connectors (24a, 24b) are configured to provide a second offset (f2) in height relative to the substrate (104);
wherein the first pair of busbar connectors (22a, 22b) are configured to accept the first busbar (62), the second pair of busbar connectors (24a, 24b) are configured to accept the second busbar (64),
the cover (110) and the interior structure (150) are configured to connect the first pair of busbar connectors (22a, 22b) and the first busbar (62) before the second pair of busbar connectors (24a, 24b) and the second busbar (64) are connected during a connection process when the cover (110) is moved toward the interior structure (150), and
the cover (10) and the interior structure (150) are configured to disconnect the second pair of busbar connectors (24a, 24b) and the second busbar (64) before the first pair of busbar connectors (22a, 22b) and the first busbar (62) are disconnected during a disconnection process when the cover (110) is moved away from the interior structure (150).

2. The battery pack of claim 1, wherein the first busbar (62) has a height relative to the cover base (101b) greater than that of the second busbar (64).

3. The battery pack of claim 1 or 2, wherein the first pair of busbar connectors (22a, 22b) have a height relative to the substrate (104) lower than that of the second pair of busbar connectors (24a, 24b).

4. The battery pack of any one of the preceding claims, wherein the first offset (f1) is greater than the second offset (f2); and/or wherein each of the first offset (f1) and the second offset (f2) is in a range of 5% to 15% of a height of the first pair of busbar connectors (22a, 22b) relative to the substrate (104).

5. The battery pack of any one of the preceding claims, wherein each of the first offset (f1) and the second offset (f2) is in a range of from 1 mm to 20 mm, preferably in a range of from 1 mm to 10 mm, more preferably in a range of from 1 mm to 5 mm.

6. The battery pack of any one of the preceding claims, further comprising a third busbar (66) attached with and disposed below the cover base (101b), and a third busbar connector (26) disposed on the substrate (104) and configured to accept and electrically connect with the third busbar (66) for ground circuit.

7. The battery pack of any one of the preceding claims, wherein the first plurality of battery cells and the second plurality of battery cells are selected from lithium ion batteries, lead-acid batteries, or any combination thereof.

8. The battery pack of any one of the preceding claims, wherein the first voltage is higher than 50 volts, preferably wherein the first voltage is in a range of from higher than 50 volts to 70 volts.

9. The battery pack of any one of the preceding claims, wherein the second voltage in a range of from 0.1 volt to 50 volts.

10. The battery pack of any one of the preceding claims, further comprising a guide blade (40) disposed on the substrate (104) of the interior structure (150) or on the cover base (101b), and a guide (42) with a slot disposed on the cover base (101b) or the substrate (104) of the interior structure (150), wherein the guide (42) is sized and configured to accept the guide blade (40).

11. A method of making the battery pack (100) of any one of the preceding claims, comprising providing the cover (110), providing the interior structure (150), and assembling the cover (110) and the interior structure (150) together to provide the battery pack (100), preferably wherein the battery pack (100) comprises Li-ion batteries, lead acid batteries, or a combination thereof.

12. A method of connecting the battery pack (100) of any one of claims 1 to 10, comprising steps of:
placing the cover (110) above the interior structure (150), wherein the first busbar (62) and the second busbar (64) are pointed toward the interior structure (150);
aligning the cover (110) with the interior structure (150), wherein the first busbar (62) is placed above the first pair of busbar connectors (22a, 22b) and the second busbar (64) is placed above the second busbar connectors (24a, 24b); and
moving the cover (110) into the interior structure (150), wherein the moving step comprises:
moving the first busbar (62) into the first pair of busbar connectors (22a, 22b) to provide electrical connection for the first plurality of battery cells; and
then moving the second busbar (64) into the second pair of busbar connectors (24a, 24b) to provide electrical connection for the second plurality of battery cells.

13. The method of claim 12, wherein the first busbar (62) has a height relative to the cover base (101b) greater than that of the second busbar (64), the first pair of busbar connectors (22a, 22b) have a height relative to the substrate (104) lower than that of the second busbar connectors (24a, 24b), and the first offset (f1) is greater than the second offset (f2).

14. A method of disconnecting the battery pack (100) of any one of claims 1 to 10, comprising a step of removing the cover (110) from the interior structure (150), wherein the removing step comprises:
disconnecting the second busbar (64) from the second pair of busbar connectors (24a, 24b) to cut off electrical connection for the second plurality of battery cells; and
disconnecting the first busbar (62) from the first pair of busbar connectors (22a, 22b) to cut off electrical connection for the first plurality of battery cells.

15. The method of claim 14, wherein the first busbar (62) has a height relative to the cover base (101b) greater than that of the second busbar (64), the first pair of busbar connectors (22a, 22b) have a height relative to the substrate (104) lower than that of the second busbar connectors (24a, 24b), and the first offset (f1) is greater than the second offset (f2).
